# EUROPEAN PATENT APPLICATION

(11) **EP 1 847 232 A1**
(43) Date of publication of application: **24.10.2007**
(21) Application number: 07007556.9
(22) Date of filing: 12.04.2007
(51) Int. Cl.: A61C 7/28, A61C 7/14

(54) **Orthodontic bracket assembly**

(30) Priority: 18.04.2006 US 379154
(71) Applicant: Ceramic Sciences, Inc., Toronto, ON M4P 1E4 (CA)
(72) Inventor: Voudouris, John C., Toronto, Ontario M2L 1L9 (CA)
(74) Representative: Grünecker, Kinkeldey, Stockmair & Schwanhäusser Anwaltssozietät

(57) **Abstract**

An orthodontic bracket assembly. The bracket assembly may generally include a base defining an archwire slot and having an occlusal portion and a gingival portion, a pivot member supported by the occlusal portion and defining a pivot axis, and a locking member supported by the pivot member for pivoting movement between an open position, in which the locking member permits access to the archwire slot, and a closed position, in which the locking member inhibits access to the archwire slot. The locking member may generally include a labial portion having a compressible gingival end engageable with the gingival portion of the base to retain the locking member in the closed position and an occlusal end, and a looped portion connected to the occlusal end of the labial portion, the looped portion extending below and then at least partially around the pivot member to support the locking member on the pivot member.

## Description

### FIELD OF THE INVENTION

The present invention relates generally to the field of orthodontics and, more specifically, to the field of orthodontic bracket assemblies.

### BACKGROUND

According to established orthodontic techniques, it is well known to attach an orthodontic bracket assembly to a patient's tooth. The bracket assembly provides a location for attaching an archwire and other orthodontic devices to facilitate movement of the tooth. According to established orthodontic techniques, it is well known to ligate an archwire to the orthodontic bracket assembly utilizing an elastic or metal ligature. In conventional orthodontic bracket assemblies, the ligature is wrapped around respective gingival and occlusal tie wings so as to overlay the archwire at mesial and distal ends of the orthodontic bracket assembly.

Recently, designers have created self-ligating bracket assemblies that do not require a separate ligature for attachment of the archwire to the bracket assembly. One type of self-ligating bracket assembly is supplied with a locking member that is movable between an open position, permitting access to the archwire slot, and a closed position, inhibiting access to the archwire slot. Self-ligating bracket assemblies substantially decrease the time involved in performing ligation procedures.

### SUMMARY OF THE INVENTION

In one embodiment, a bracket assembly may generally include a base defining an archwire slot, a pivot member supported by the base, and a locking member supported by the pivot member for pivoting movement between a closed position, in which access to the archwire slot is inhibited, and an open position, in which access to the archwire slot is permitted. The locking member may include a looped base portion supporting the locking member on the pivot member. In some constructions, the bracket assembly may include a pivot limiting structure, such as a knob and slot, operable to limit pivoting movement of the locking member beyond an open position.

In another embodiment, the bracket assembly may include a locking member having a V-shaped latch portion extending between the mesial and distal ends of the locking member and engageable with the base to hold the locking member in the closed position. In some constructions, the locking member may include a lingual finger portion engageable with the archwire to provide active ligation.

In yet another embodiment, the bracket assembly may include a base defining an archwire slot and a V-shaped recess adjacent the archwire slot and extending substantially between the mesial and distal ends of the base. The recess may receive a V-shaped latch portion of the locking member. The base may include mesial and distal end walls closing the ends of the recess. The base may include overhanging portions engageable with the latch portion to positively lock the latch portion in the closed position.

In a further embodiment, the bracket assembly may include a base defining a relief area, and a locking member including a tab engageable to compress the latch portion and overlying the relief area. The relief area may enable manipulation of the tab.

Independent features and independent advantages of the present invention will become apparent to those skilled in the art upon review of the following detailed description and drawings.

### BRIEF DESCRIPTION OF THE DRAWINGS

Fig. 1 is a perspective view of an orthodontic bracket assembly embodying the present invention, illustrating a locking member in a closed position and securing an archwire.

Fig. 2 is a section view of the orthodontic bracket assembly shown in Fig. 1.

Fig. 3A is a perspective view of an orthodontic bracket assembly according to another embodiment of the present invention.

Fig. 3B is a perspective view of an orthodontic bracket assembly similar to that shown in Fig. 3A, illustrating a base without a cross-bar portion.

Fig. 4 is a detail perspective view of the orthodontic bracket assembly shown in Fig. 3A, illustrating the latch being opened.

Fig. 5 is a side section view of an orthodontic bracket assembly according to yet another embodiment of the present invention, illustrating a locking member in a closed position.

Fig. 6 is a lingual view of the locking member shown in Fig. 5.

Fig. 7 is a perspective view of an orthodontic bracket assembly according to a further embodiment of the present invention, illustrating a locking member in a closed position and securing an archwire.

Fig. 8 is a perspective view of the orthodontic bracket assembly shown in Fig. 7, illustrating the locking member in an open position and the archwire removed.

Before at least one embodiment of the invention is explained in detail, it is to be understood that the invention is not limited in its application to the details of construction and the arrangements of components set forth in the following description or illustrated in the drawings. The invention is capable of other embodiments and of being practiced or of being carried out in various ways. Also, it is to be understood that the phraseology and terminology used herein is for the purpose of description and should not be regarded as limiting.

Although references are made below to directions, such as left, right, up, down, top, bottom, front, rear, forward, back, etc., in describing the drawings, they are made relative to the drawings (as normally viewed) for convenience. These directions are not intended to be taken literally or limit the present invention in any form.

### DETAILED DESCRIPTION

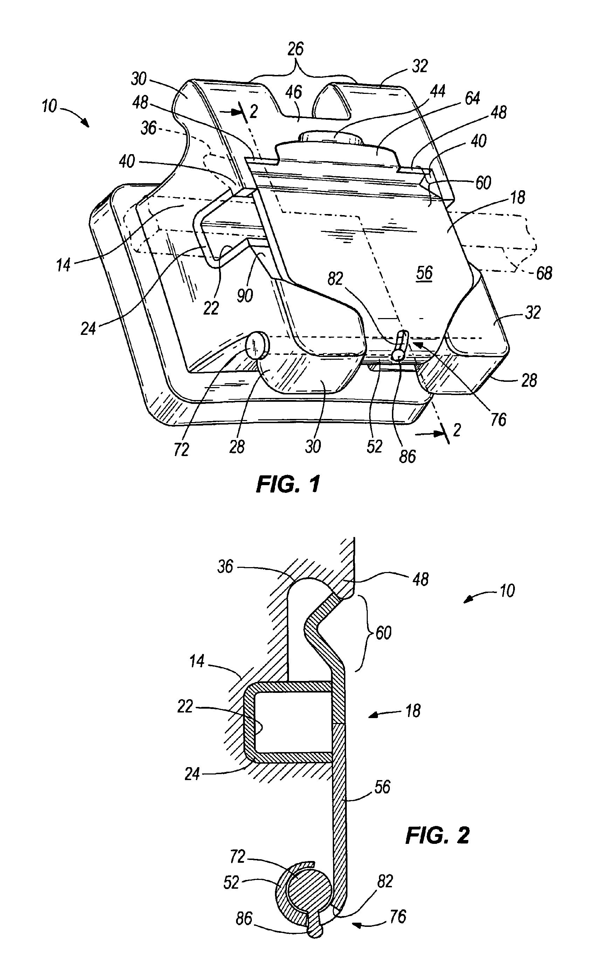

An orthodontic bracket assembly 10 embodying the invention is illustrated in Figs. 1-2. The bracket assembly 10 generally includes a base 14 and a locking member or clip 18 movable (e.g., pivotable) relative to the base 14. The base 14 is generally bonded to the surface of a tooth and defines a labially-opening archwire slot 22. A slot liner 24 is provided in the archwire slot 22. In the illustrated construction, the base 14 can be made from a ceramic material (e.g., polycrystalline alumina). In other constructions, the base 14 could be made from other materials such as, for example, polymers, resins, metals, or the like.

The base 14 defines gingival and occlusal directions and mesial and distal directions. The base 14 includes two gingival tie wings 26 extending from the base 14 in the gingival direction and two occlusal tie wings 28 (one shown) extending from the base 14 in the occlusal direction. Although dependent upon the position of the tooth to which the bracket assembly 10 is mounted, the illustrated tie wings 26, 28 can be further identified as mesial tie wings 30 located on the mesial side of the bracket assembly 10 and distal tie wings 32 (one shown) located on the distal side of the bracket assembly 10.

The base 14 also defines a latch-receiving recess 36 having a generally beveled or V-shape (when viewed from a side or ¾ view) and extending in a mesio-distal direction. In the illustrated construction, ends walls 40 close the mesial and distal ends of the recess 36. A dish-shaped retrusion or relief area 44 is defined in the cross-bar portion 46 of the gingival portion of the ceramic base 14 adjacent the recess 36. Locking edges or overhanging portions 48 are provided at the labial edge of the recess 36 and on the mesial and distal sides of the relief area 44.

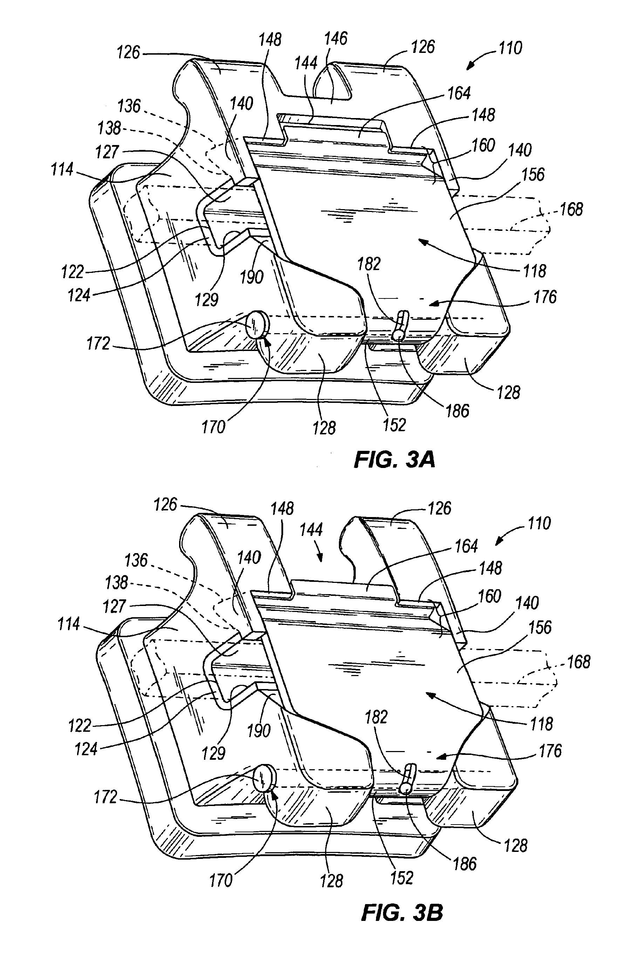

In the illustrated ceramic base 14, the cross-bar portion 46 of the gingival portion of the base 14 may provide improved strength of the base 14. It should be understood that, if the base 14 is formed of another material, such as, for example, metal, a cross-bar portion may not be provided on the gingival portion of the metallic base 14 (see Fig. 3B). In such constructions, as shown in Fig. 3B, a relief area may not be necessary because the gingival end of the locking member 118 would be accessible between the gingival tie wings 126 (as illustrated at 144). However, even in such a metallic base construction, a cross-bar may be provided to prevent unwanted or accidental engagement (e.g., by a finger, toothbrush, etc.) and opening of the locking member 18.

The locking member 18 is supported on the base 14 for movement between a closed position (shown in Fig. 1), in which access to the archwire slot 22 is inhibited, and an open position (similar to that shown in Fig: 8), in which access to the archwire slot 22 is permitted. The locking member 18 generally includes a looped base portion 52, a labial body portion 56, and a latch portion 60.

As shown in Figs. 1-2, in the closed position, the body portion 56 of the locking member 18 covers the archwire slot 22 and (see Fig. 2) engages the labial ends of the slot liner 24. In this construction, the body portion 56 does not engage the archwire 68 such that the locking member 18 is passive.

The latch portion 60 is generally re-curved or V-shaped (when viewed from a side or ¾ view) and extends across the mesio-distal width of the locking member 18. The latch portion 60 is configured as a resilient or spring latch, so that the latch portion 60 will compress when forced into the recess 36. The spring force in the latch portion 60 and engagement with the overhanging portions 48 positively holds the locking member 18 in a closed position.

It should be understood that, in other constructions (not shown), the resilient characteristic of the latch portion 60 may be provided by another spring-type structure and/or by a resilient material portion (e.g., elastomeric or flexible material, plastic, rubber, etc.) provided on the locking member 18.

In the closed position, the latch portion 60 is positioned between the end walls 40. The end walls 40 substantially prevent entry of debris (e.g., food) into the V-shaped portion of the latch portion 60 and into the recess 36.

In the illustrated construction, the latch portion 60 extends across a substantial portion of the mesio-distal width of the base 14 and engages the base 14 at the mesial and distal ends. This may improve dental rotation corrections and may inhibit deformation and/or flaring out labially of the latch portion 60 (especially at the mesial and distal ends) and of the locking member 18.

For example, if the mesio-distal width of the base 14 is "1.00", the mesio-distal width of the latch portion 60 is on the order of, for example, about 0.75 to about 0.95 and, preferably, may be about 0.88 the mesio-distal width of the base 14. In such constructions, the combined mesio-distal width of the end walls 40 is, for example, about 0.25 and, preferably, may be about 0.12 the mesio-distal width of the base 14. However, it should be understood that, if no end walls 40 are provided, the mesio-distal width of the latch portion 60 may be on the order of 1.00 the mesio-distal width of the base 14. It should also be understood that, for some other constructions (not shown), the latch portion 60 may be smaller than 0.75 the mesio-distal width of the base 14.

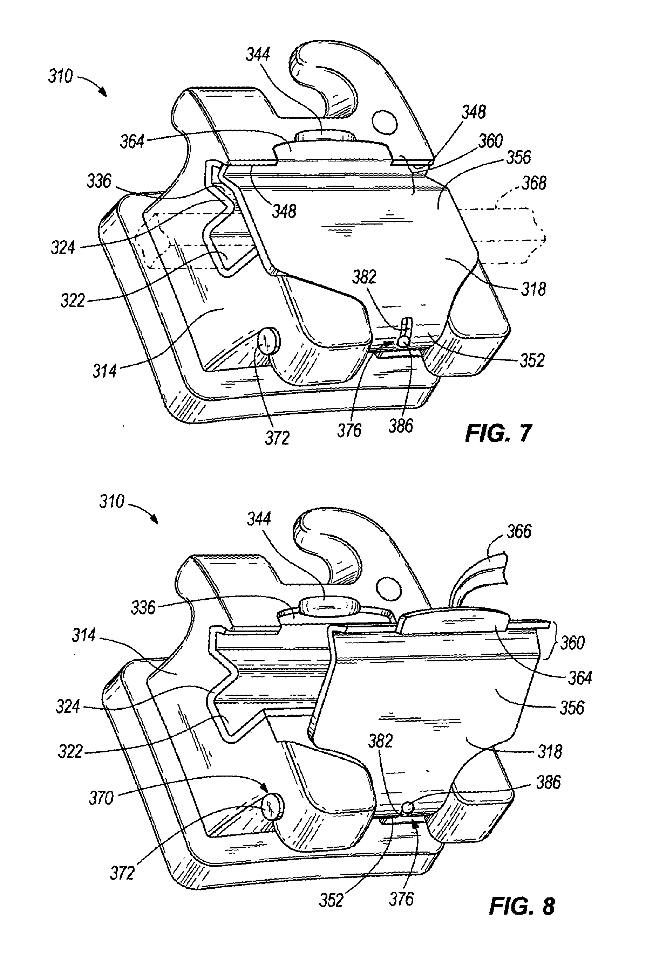

A tab 64 is provided on the latch portion 60. The tab 64 lies across a portion of the relief area 44 when the locking member 18 is in the closed position. The relief area 44 allows for easy insertion of a removal tool (similar to the tool 366 shown in Fig. 8) to manipulate the latch portion 60 for moving the locking member 18 from the closed position (shown in Fig. 1) to an open position (similar to that shown in Fig. 8). This allows the removal of the archwire 68 (shown in phantom) from the archwire slot 22, as is known in the art. The tab 64 is generally flush with or recessed below the adjacent labial surfaces of the base 14, for example, to prevent unwanted or accidental engagement of the tab 64 (e.g., by a finger, toothbrush, etc.) and opening of the locking member 18, to prevent engagement with the lips or cheeks of the patient, etc.

In the illustrated construction, the tab 64 extends less than amount of the latch portion 60 extends across the mesio-distal width of the base 14. For example, if the mesio-distal width of the base 14 is "1.00", the mesio-distal width of the tab 64 may be approximately 0.50 or more and, preferably, may be approximately 0.50 the mesio-distal width of the base 14. However, it should be understood that, if no end walls 40 are provided, the mesio-distal width of the tab 64 may be approximately slightly more than 0.50 the mesio-distal width of the base 14. It should also be understood that, for some other constructions (not shown), the tab 64 may be smaller than 0.50 the mesio-distal width of the base 14.

It should be understood, that, in other constructions (not shown), a tab may not be provided on the latch portion 60. In such construction, the gingival end of the latch portion 60 may be directly engaged and manipulated by the removal tool.

The locking member 18 rotates about a pivot member or cylindrical rod 72, which may be secured to the base 14 (e.g., extending between the occlusal tie wings 28), but which may instead be secured to and rotate with the locking member 18. In the illustrated construction, the looped base portion 52 extends from the body portion 56, below and around the pivot rod 72. The base portion 52 thus captures the pivot rod 72 to pivotally support the locking member 18 on the pivot rod and on the base 14.

The illustrated arrangement of the looped base portion 52, the body portion 56 and the latch portion 60 provides for a larger, substantially flat and uninterrupted surface area on the body portion 56. The locking member 18 may have fewer angular edges to improve comfort (e.g., if the mesial and distal ends contact the lips and cheeks of a patient). Also, such a body portion 56 may have improved suitability for coating, laminating, etc. in a manner described in U.S. Patent Application Publication No. US 2004/0072119 A1, the entire contents of which is hereby incorporated by reference.

It should be understood that, in other constructions (not shown), the arrangement of the locking member 18 on the base 14 may be different. As an example, the pivot rod 72 may be supported on the gingival tie wings 26, and the latch portion 60 may resiliently engage the occlusal tie wings 28 (e.g., in a V-shaped latch-receiving recess 36 formed in the occlusal tie wings 28) to hold the locking member 18 in the closed position. Such an arrangement would generally be the inverse of the arrangement illustrated Figs. 1-2.

In some constructions (as shown in Figs. 1-3 and 7-8), pivot limiting structure 76 is provided to limit the pivoting movement of the locking member 18 beyond an open position (as shown in Fig. 8). Without such structure 76, the locking member 18 may be able to pivot 180° from the closed position which may make the locking member 18 difficult to close or to repeatedly close.

In the illustrated construction, the structure 76 includes a small vertically-opening notch or slot 82 formed in the looped base portion 52 and providing a first limit surface and a protrusion, projection or knob 86 connected to the pivot rod 72 and providing a second limit surface. The knob 86 engages the end of the slot 82 to hold the locking member 18 in the open position (as shown in Fig. 8) and to limit movement of the locking member 18 beyond the open position (as shown in Fig. 8). In the illustrated construction, the open position is a pivoted position, for example, equal to or less than about 90° and, preferably, about 45° from the closed position.

To open the locking member 18, the tab 64 is engaged to compress the latch portion 60 into the recess 36. The latch portion 60 is disengaged from the overhanging portions 48, and the locking member 18 is pivoted labially to the open position. In the illustrated construction, engagement of the knob 86 and the end of the slot 82 holds the locking member 18 in the open position. The archwire slot 22 is accessible to insert or remove the archwire 68.

To close the locking member 18, the locking member 18 is pivoted lingually with a human finger. As the latch portion 60 engages the base 14, the latch portion 60 compresses to clear the overhanging portions 48. The latch portion 60 then expands and is engaged lingually behind the overhanging portions 48 such that the locking member 18 is locked in the closed position (shown in Figs. 1-2). The tab 64 is free to automatically follow because it is attached to the closing latch portion 60.

In some constructions, a ramp portion (not shown) may be provided on the labial surface of the base 14. Engagement, in the direction of closing, of the latch portion 60 against such a ramp portion may cause the latch portion 60 to be compressed to clear the overhanging portions 48 such that the locking member 18 is more easily moved to the closed position without the use of the tool. In yet other constructions (not shown), a tool may be used to assist in moving the locking member 18 to the closed position.

In the illustrated construction, a recessed area or generally Y-shaped bevel 90 is provided on the labial surface of the occlusal tie wings 28 of the base 14. As shown in Fig. 1, the labial body portion 56 of the locking member 18 sits in the recessed area 90 such that labial surface of the body portion 56 of the locking member 18 is substantially flush with the adjacent labial surfaces of the base 14. This recessed area 90 also enables forming (e.g., milling) of the gingival portion of the base 14 to include the recess 36 with the end walls 40 and the overhanging portions 48.

The orthodontic bracket assembly 110 of Figs. 3-4 is similar to the bracket assembly 10 and includes a base 114 having a pair of gingival tie wings 126 and a pair of occlusal tie wings 128. Between the respective tie wings is an archwire slot 122 for retaining an archwire (not shown). The archwire slot 122 includes a gingival surface 127 adjacent the gingival tie wings 126. In the illustrated embodiment, the gingival surface 127 may be smaller than an occlusal surface 129 of the archwire slot 122. The gingival surface 127 opens away vertically from the archwire slot 122 to form a recess or concavity 136 in the base 114.

A wall 138 is provided between the V-shaped (when viewed from a side or ¾ view) recess 136 and the archwire slot 122. The recess 136 houses the V-shaped latch portion 160, and, during compression and/or extension of the latch member 160, the wall 138 keeps latch portion 160 out of archwire slot 122 such that the latch portion 160 does not engage or obstruct the archwire 168.

The occlusal tie wings 128 include a semi-circular recess 170 on the lingual side. The recess 170 is sized to receive a pivot rod 172 on which a locking member 118 may rotate between a closed position and an open position. The locking member 118 includes a looped base portion 152, a body portion 156, and a V-shaped (when viewed from a side or ¾ view) latch portion 160. As described in previous embodiments, the base portion 152 is configured to retain the locking member 118 on the pivot rod 172.

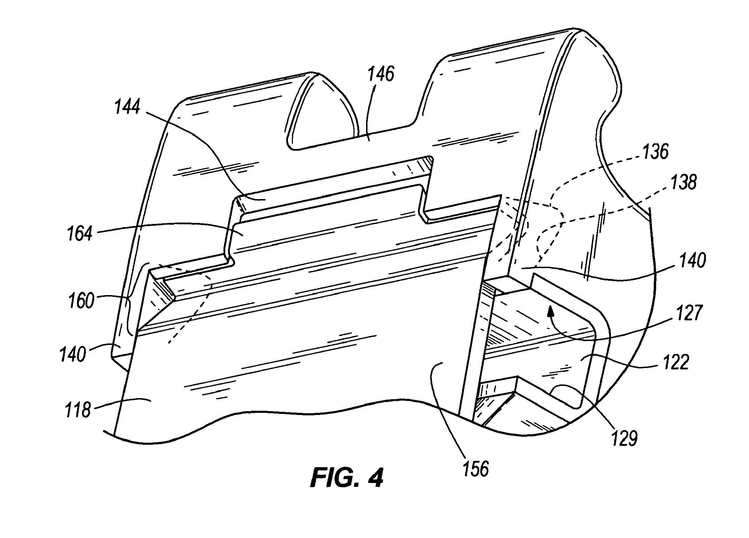

The V-shaped latch portion 160 is received in V-shaped recess 136 when the locking member 118 is in the closed position. A tab 164 extends from the latch portion 160 and may lie in a vertically-extending relief area 144 in the base 114 when closed. In the illustrated construction, the relief area 144 provides increased space above and behind the tab 164 such that the latch portion 160 can easily compress down and out away from overhanging portions 148. The tab 164 may be used to compress the latch portion 160 and unlock the locking member 118 (as shown in Fig. 4).

In the construction illustrated in Fig. 3A, the cross-bar portion 146 extends over the relief area 144 and over the tab 164 when the locking member 118 is in the closed position. Also, in the illustrated construction, tab 164 is lingually inset under cross-bar 146. This arrangement prevents unwanted or accidental engagement of the tab 164 (e.g., by a finger, toothbrush, etc.) and opening of the locking member 118, prevents engagement with the lips or cheeks of the patient, etc. The cross-bar portion 146 may also prevent debris (e.g., food) from entering relief area 144.

As best shown in Fig. 4, the latch portion 160 of the illustrated locking member 160 extends across substantially the majority of the mesio-distal width of the locking member 118. In addition, the recess 136 extends across substantially the majority of the mesio-distal width of the base 114. As a result, the latch portion 160 and the body portion 156 of the locking member 118 engage the base 114 at approximately both the mesial end and the distal end of the base 114 for effective dental rotation correction using the wider mesio-distal extension of the locking member 118 and corresponding mesio-distal extending recess overhangs 148, thus providing a secure engagement between the locking member 118 and the base 114. A small portion (e.g., 1/4) of the latch portion 160 at far mesial/distal ends may be exposed from overhanging portions 148 due to the configuration/construction of the recess 136 such that the locking member 118 may be easier to open.

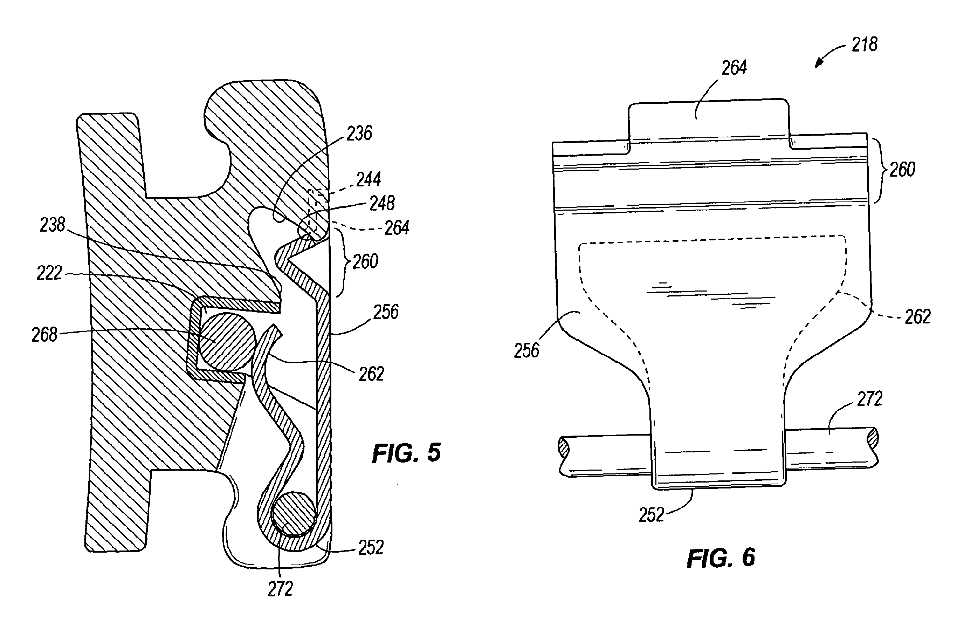

The embodiment of Figs. 5-6 includes a locking member 218 which is similar to the locking members 18 and 118. The locking member 218 includes a base portion 252, a body portion 256, a V-shaped latch portion 260, and an integral lingual finger 262 that actively seats the archwire 268 into the archwire slot 222. The finger 262 is designed to be flexible and resilient to provide active force on the archwire 268 and seat the archwire 268 with the locking member finger 262 toward the base of the archwire slot 222. In the illustrated embodiment, the finger 262 is mesio-distally narrower than the body portion 256. It should be understood that the illustrated finger 262 may be included with a locking member in other constructions, such as the constructions illustrated in Figs. 1-4 and 7-8.

As shown in Fig. 5, a wall 238 is provided between the recess 236 and the archwire slot 222. The recess 236 houses the latch portion 260, and, during compression and/or extension of the latch member 260, the wall 238 keeps latch portion 260 out of archwire slot 222 such that the latch portion 260 does not engage or obstruct the archwire 268.

As shown in Fig. 5, the overhanging portions 248 engage latch portion 260 to positively lock the locking member 218 in the closed position. In the illustrated construction, the relief area 244 provides increased space above and behind the tab 264 such that the latch portion 260 can easily compress down and out away from overhanging portions 248. The tab 264 may be used to compress the latch portion 260 and unlock the locking member 218

In the illustrated construction, the cross-bar portion 246 extends over the relief area 244 and over the tab 264 when the locking member 218 is in the closed position. Also, in the illustrated construction, tab 264 is lingually inset under cross-bar 246. This arrangement prevents unwanted or accidental engagement of the tab 264 (e.g., by a finger, toothbrush, etc.) and opening of the locking member 218, prevents engagement with the lips or cheeks of the patient, etc. The cross-bar portion 246 may also prevent debris (e.g., food) from entering relief area 244.

The embodiment of Figs. 7-8 includes a bracket assembly 310 which is similar to the bracket assemblies 10, 110 and 210. However, in the illustrated construction, the base 314 does not include mesial and distal end walls closing the recess 336. Accordingly, the base 314 defines a mesio-distally wider recess 336 extending substantially across the width of the base 314.

In the illustrated construction, the locking member 318 is also wider and includes a wider latch member 360 received in the recess 336. In the illustrated construction, the latch portion 360 extends across substantially all of the mesio-distal width of the base 314 and engages the base 314 at the mesial and distal ends. This may further improve dental rotation corrections using a large moment of couple and may inhibit deformation and/or flaring out labially of the latch portion 360 (especially at the mesial and distal ends) and of the locking member 318.

For example, because no end walls 40 are provided, the mesio-distal width of the latch portion 360 is on the order of 1.00 the mesio-distal width of the base 314. However, it should be understood that the mesio-distal width of the latch portion 360 may be less than (e.g., about 0.75 to about 0.95 and may be about 0.88) the mesio-distal width of the base 314, for example, if a locking member (similar to the locking member 18, 118 or 218) is used with the base 314. It should also be understood that, for some other constructions (not shown), the latch portion 360 may be smaller than 0.75 the mesio-distal width of the base 314.

In the illustrated construction, the slot liner 324 lines the archwire slot 322 and at least a portion of recess 336. The slot liner 324 may be formed of a material with improved characteristics relative to a ceramic base 314 to resist wear or damage from engagement with the latch portion 360. It should be understood that, in other constructions (not shown), the slot liner 324 may not line any region of the recess 336.

One or more independent features or independent advantages may be set forth in the following claims:

## Claims

1. An orthodontic bracket assembly comprising:
a base defining an archwire slot and having an occlusal portion and a gingival portion;
a pivot member supported by the occlusal portion and defining a pivot axis; and
a locking member supported by the pivot member for pivoting movement between an open position, in which the locking member permits access to the archwire slot, and a closed position, in which the locking member inhibits access to the archwire slot, the locking member including
a labial portion having a gingival end engageable with the gingival portion of the base to retain the locking member in the closed position and an occlusal end, and
a looped portion connected to the occlusal end of the labial portion, the looped portion extending below and then at least partially around the pivot member to support the locking member on the pivot member.

2. The bracket assembly of Claim 1, wherein the pivot member includes a cylindrical rod.

3. The bracket assembly of Claim 1, wherein the labial portion and the looped portion cooperate to capture the pivot member.

4. The bracket assembly of Claim 1, and further comprising structure operable to limit pivoting movement of the locking member beyond the open position, the structure including a first surface on the locking member and a second surface on at least one of the pivot member and the base, the first surface and the second surface being engageable to limit movement of the locking member beyond the open position.

5. The bracket assembly of Claim 4, wherein the locking member defines a slot providing the first surface, and wherein the at least one of the pivot member and the base includes a projection movable in the slot and providing the second surface.

6. The bracket assembly of Claim 5, wherein the pivot member includes the projection providing the second surface.

7. The bracket assembly of Claim 1, wherein the locking member includes a lingual extension portion connected to the looped portion and engageable with an archwire supported in the archwire slot to provide active seating of the archwire toward a lingual surface of the archwire slot.

8. The bracket assembly of Claim 1, wherein the base has a labial surface, and wherein, in the closed position, the labial portion of the locking member is substantially flush with the labial surface of the base.

9. The bracket assembly of Claim 1, wherein the locking member has a mesial side and a distal side and includes
a latch portion engageable with the base to lock the locking member in the closed position, and
a resilient, re-curved, V-shaped portion biasing the latch portion into engagement with the base, the V-shaped portion being directed in a lingual direction and extending between the mesial side and the distal side.

10. The bracket assembly of Claim 9, wherein the base defines a V-shaped recess adjacent the archwire slot, the latch portion being received in the recess in the closed position, and wherein the base includes an overhang portion engageable with the latch portion to lock the locking member in the closed position.

11. The bracket assembly of Claim 10, wherein the latch portion is depressible into the recess to disengage from the overhang portion and to move the locking member from the closed position to the open position.

12. The bracket assembly of Claim 9, wherein the locking member further includes a tab portion connected to the latch portion and engageable to disengage the latch portion from the base such that the locking member is movable at least from the closed position to the open position.

13. The bracket assembly of Claim 12, wherein the base has a labial surface, a relief area being defined in the labial surface, the relief area being above and behind the tab portion when the locking member is in the closed position, the relief area permitting access to and enabling manipulation of the tab portion.

14. An orthodontic bracket assembly comprising:
a base defining an archwire slot;
a locking member supported by the base for pivoting movement between an open position, in which the locking member permits access to the archwire slot, and a closed position, in which the locking member inhibits access to the archwire slot, the locking member having a mesial side and a distal side and including
a labial portion pivotally connected to the base, the labial portion inhibiting access to the archwire slot in the closed position of the locking member, and
a latch portion connected to the labial portion, the latch portion having a V-shape directed in a lingual direction and extending between the mesial side and the distal side, the latch portion being engageable with the base to lock the locking member in the closed position.

15. The bracket assembly of Claim 14, wherein the base defines a V-shaped recess adjacent the archwire slot, the latch portion being received in the recess in the closed position.

16. The bracket assembly of Claim 15, wherein the base includes a mesial wall and a distal wall, the recess extending between the mesial wall and the distal wall, the latch portion being positioned between the mesial wall and the distal wall in the closed position.

17. The bracket assembly of Claim 15, wherein the base includes an overhang portion engageable with the latch portion to lock the locking member in the closed position.

18. The bracket assembly of Claim 17, wherein the latch portion is depressible into the recess to disengage from the overhang portion and to move the locking member from the closed position to the open position.

19. The bracket assembly of Claim 14, wherein the locking member further includes a tab portion connected to the latch portion and engageable to disengage the latch portion from the base such that the locking member is movable at least from the closed position to the open position.

20. The bracket assembly of Claim 19, wherein the base has a labial surface, a relief area being defined in the labial surface, the relief area being above and behind the tab portion when the locking member is in the closed position, the relief area permitting access to and enabling manipulation of the tab portion.

21. The bracket assembly of Claim 14, and further comprising a pivot rod supported by the base, wherein the locking assembly further includes a looped portion connected to the labial portion and supported on the pivot rod to support the locking member for pivoting movement on the base.

22. An orthodontic bracket assembly comprising:
a base defining an archwire slot and a mesio-distally extending V-shaped recess adjacent the archwire slot;
a locking member supported by the base for pivoting movement between an open position, in which the locking member permits access to the archwire slot, and a closed position, in which the locking member inhibits access to the archwire slot, the locking member having a mesial side and a distal side and including
a labial portion pivotally connected to the base, the labial portion inhibiting access to the archwire slot in the closed position of the locking member, and
a latch portion connected to the labial portion and extending between the mesial side and the distal side, the latch portion being received in the recess and being engageable with the base to lock the locking member in the closed position.

23. The bracket assembly of Claim 22, wherein the latch portion has a V-shape directed in a lingual direction and extending between the mesial side and the distal side, the V-shape of the latch portion being received in the V-shaped recess in the closed position of the locking member, the V-shaped recess permitting disengagement of the latch portion from the base to allow movement of the locking member from the closed position to the open position.

24. The bracket assembly of Claim 22, wherein the recess is partially defined by a wall between the recess and the archwire slot, the wall substantially preventing movement of the latch portion into the archwire slot.

25. The bracket assembly of Claim 22, wherein the base includes a mesial wall and a distal wall, the recess extending between the mesial wall and the distal wall, the latch portion being positioned between the mesial wall and the distal wall in the closed position.

26. The bracket assembly of Claim 22, wherein the base includes an overhang portion engageable with the latch portion to lock the locking member in the closed position.

27. The bracket assembly of Claim 26, wherein the latch portion is depressible into the recess to disengage from the overhang portion and to move the locking member from the closed position to the open position.

28. The bracket assembly of Claim 22, wherein the base has an occlusal portion and a gingival portion and a labial surface, a recessed area being formed from the labial surface of the occlusal portion, and wherein the labial portion of the locking member is received in the recessed area in the closed position of the locking member such that a labial surface of the locking member is substantially flush with the labial surface of the occlusal portion of the base.

29. An orthodontic bracket assembly comprising:
a base defining an archwire slot and having an occlusal portion and a gingival portion, a relief area being defined in the gingival portion;
a locking member supported by the base for pivoting movement between an open position, in which the locking member permits access to the archwire slot, and a closed position, in which the locking member inhibits access to the archwire slot, the locking member having a mesial side and a distal side and including
a labial portion pivotally connected to the base, the labial portion inhibiting access to the archwire slot in the closed position of the locking member,
a latch portion connected to the labial portion and extending between the mesial side and the distal side, the latch portion being engageable with the base to lock the locking member in the closed position, and
a tab portion connected to the latch portion and engageable to disengage the latch portion from the base such that the locking member is movable at least from the closed position to the open position;
wherein the relief area is above and behind the tab portion when the locking member is in the closed position, the relief area permitting access to and enabling manipulation of the tab portion.

30. The bracket assembly of Claim 29, wherein the gingival portion of the base has a labial surface above the relief area, and wherein, in the closed position, the tab portion is one of flush with and recessed lingually from the labial surface of the base.

31. The bracket assembly of Claim 29, wherein the base defines a V-shaped recess between the relief area and the archwire slot, the latch portion being received in the recess in the closed position of the locking member.

32. The bracket assembly of Claim 31, wherein the base includes a mesial overhang portion and a distal overhang portion, the relief area being between the overhang portions, the overhang portions being engageable with the latch portion to retain the locking member in the closed position.

33. The bracket assembly of Claim 31, wherein the base includes a mesial wall and a distal wall, the recess extending between the mesial wall and the distal wall.

34. The bracket assembly of Claim 31, wherein the latch portion has a V-shape directed in a lingual direction and extending between the mesial side and the distal side, the V-shape of the latch portion being received in the V-shaped recess in the closed position of the locking member, the V-shaped recess permitting disengagement of the latch portion from the base to allow movement of the locking member from the closed position to the open position.
